# EUROPEAN PATENT SPECIFICATION

(11) **EP 4 232 391 B1**
(45) Date of publication and mention of the grant of the patent: **20.11.2024**
(21) Application number: 21799222.1
(22) Date of filing: 22.10.2021
(51) Int. Cl.: B66B 9/02

(54) **A DRIVE NUT FOR MOVING A PLATFORM OF A PLATFORM ELEVATOR**
ANTRIEBSMUTTER ZUM BEWEGEN EINER PLATTFORM EINES PLATTFORMAUFZUGS
ÉCROU D'ENTRAÎNEMENT POUR DÉPLACER UNE PLATE-FORME D'UN ÉLÉVATEUR À PLATE-FORME

(30) Priority: 23.10.2020 SE 2051239
(43) Date of publication of application: 30.08.2023
(73) Proprietor: Swift Home Lifts Sweden AB, 114 54 Stockholm (SE)
(72) Inventor: THÅRLIN, Bengt-åke, 134 41 Gustavsberg (SE)
(74) Representative: Ström & Gulliksson AB
(86) International application number: PCT/EP2021/079324
(87) International publication number: WO 2022/084496

(56) References cited:
- EP-A1- 3 415 457
- EP-A1- 3 460 292
- WO-A1-2006/135317

## Description

### Technical field

The present disclosure relates to a drive nut for moving a platform of a platform elevator. The present disclosure also relates to an arrangement of a drive nut and a threaded screw for a platform elevator, a platform elevator, a method of adapting a platform elevator drive nut and to a use of a drive nut.

### Background art

Platform elevators are becoming increasingly common for transport people or goods between floors in private homes or in minor buildings. A platform elevator is disclosed in SE1750757A1 and comprises an elongated threaded screw which is arranged vertical in an elevator shaft in a building and a corresponding drive nut arranged on the screw. An elevator platform is supported on the drive nut and an electric motor is arranged to rotate the nut such that the nut and the elevator are moved along the screw. Typically, the threaded screw is provided in separate threaded sections that are joined to each other when installing the platform elevator in the building. The threaded sections may thereby be joined together by a male/female screw joint formed in the ends of two consecutive threaded sections.

A general problem associated therewith is that a play may occur between the ends of the threads of two consecutive threaded sections. The play may be caused by over-turning or under-turning one of the threaded sections at the assembly of the threaded screw. When the upper screw section is overturned, its thread end will form a cutting edge that the drive nut meets when it moves upwards. The upper screw section may also be under-turned, and that can cause wear to drive nut as well. However, the predominant problem relating to drive nuts for elevator platforms relates to overturned upper screw sections and will therefore this problem will be mostly discussed below. When the drive nut runs over the uneven interface where the two threaded screw sections meet, the thread of the drive nut may hit the end of the thread of the consecutive screw section. The impact may cause unpleasant noise and chocks to the platform with resulting discomfort of the passengers.

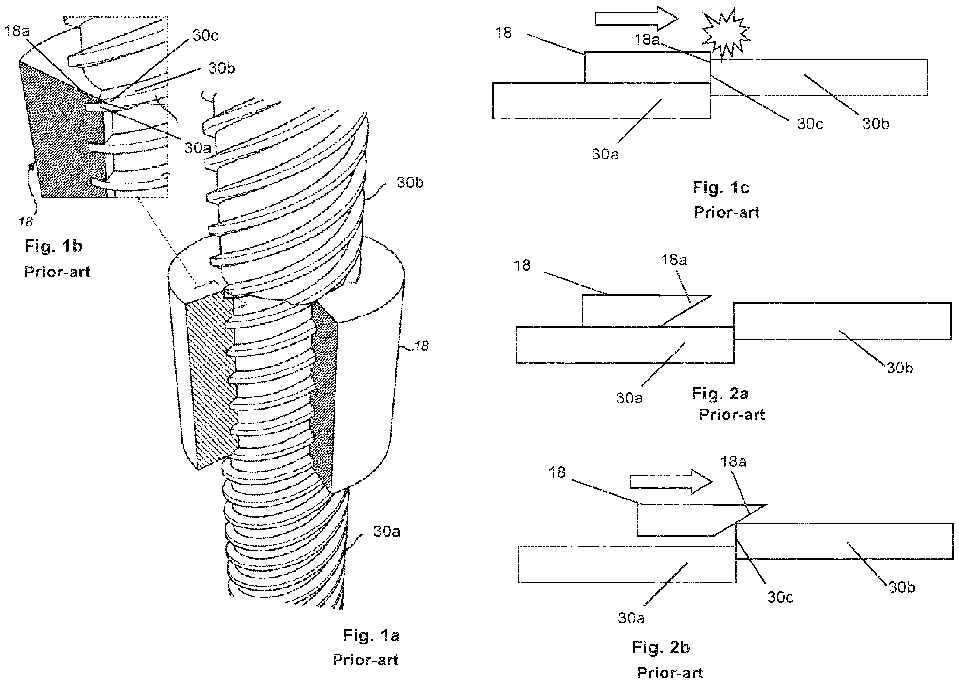

Figure 1a and 1b show in cross-section a prior-art drive nut 18 that runs over an interface 30c between the screw sections 30a and 30b of a threaded screw. Figure 1c shows schematically the impact between the thread 18a of the inner thread of the drive nut 18 and the thread of the second screw section 30b in the interface 30c of the screw sections 30a, 30b. To solve this impact problem, the lower thread flank of the drive nut in SE1750757A1 has been provided with a sloping profile which facilitates running up onto the end the thread 30b of the consecutive screw section. Figure 2a and 2b schematically illustrate this. The design of drive nut of SE1750757A1 has shown effective in reducing adverse effects when the drive nut runs over an interface between two screw sections. However, there is still a need for improvement in drive nuts for platform elevators.

Further technology related to platform elevators is shown in WO2006135317A1, which discloses a drive nut 3. The underlying problem that the drive nut 3 aims to solve are to eliminate vibrations that are caused when the drive nut runs up and down the threaded screw 1. To solve this problem, attempts were made to provide widening ends of the drive nut 3. However, at the time WO2006135317A1 it was not known that the vibrations were caused by the fact that the thread flanks of the screw and the nut come into engagement before the crest of the screw thread touches the bottom of the nut thread. This mechanism was discovered later and now the threads of conventional drive nuts and screws are mutually configured such that the crest of the screw thread touches the bottom of the nut thread before the thread flanks of screw and nut come into engagement.

Thus, it is an object of the present disclosure to provide an improved drive nut for a platform elevator.

In detail, it is an object of the present disclosure to provide a drive nut for a platform elevator which allows for smooth passing across an interface between two consecutive screw sections.

### Summary of the invention

According to one aspect of the present invention at least one of these objects are met by a method of adapting a platform elevator drive nut to a threaded screw of a platform elevator according to appended claim 1.

In practice, the decreasing width of the nut thread lower flank results in a small contact area between the nut thread lower flank and an edged formed interface of the threads of two consecutive screw segments of the threaded screw as the nut thread lower flank enters the screw thread of the consecutive screw segment. This facilitates smooth cutting of the underside of lower thread flank against the edge-formed interface and adapts the shape of the thread lower flank to the interface between the screw segments. This, in turn result in smooth entering, with no or little noise and chocks, of the nut thread lower flank onto the screw thread of the consecutive screw segment.

The pitch of the drive nut inner thread of a platform elevator is preferably relatively high. The general problem associated with the play between the ends of the threads of two consecutive threaded sections is believed to increase as the thread pitch is increased. In platform elevators, it is preferred to design the threads such that a high vertical elevator speed is achieved at a low rotational speed of the drive nut. Therefore, the pitch of the drive nut inner thread is preferably relatively high, such as 5 to 10 mm.

The drive nut and the screw of a platform elevator may comprise more than one thread each. The general problem associated with the play between the ends of the threads of two consecutive threaded sections is believed to increase as the number of threads are increased. For safety reasons, the drive nut and the threaded screw preferably comprise more than one thread each, such as five, six, seven or eight threads.

When the drive nut and the threaded screw comprise a relatively high pitch and multiple threads, a high thread lead is safely obtained. The lead for a screw thread is the axial travel for a single revolution. In platform elevators, it is preferred to design the threads such that a high vertical elevator speed is achieved at a low rotational speed of the drive nut. Thus, a high thread lead is preferred. The pitch may be 5 to 10 mm.

The portion of the nut thread lower flank that has a decreasing, e.g. continuously decreasing, width may extend along approximately 1/5 to 4/5, such as 1/5 to 1/2, of the circumference of the drive nut. If the portion is too short, the wear of the underside of the nut thread lower flank against the irregularity may not be sufficiently smooth. If the portion is too long, the load bearing capability of the drive nut may be unnecessarily weakened.

If the drive nut and the threaded screw comprise five, six, seven or eight threads, the portion of the nut thread lower flank that has a decreasing width may extend along approximately 1/5 to 4/5, such as 1/5 to 1/2, of the circumference of the drive nut. If the drive nut and the threaded screw comprise six or seven threads, the portion of the nut thread lower flank that has a continuously decreasing width may extend along approximately 1/4 to 1/3 of the circumference of the drive nut.

In one embodiment, the drive nut and the threaded screw comprise six threads and the pitch is 6 mm, thus the lead is 36 mm. In this embodiment, the portion of the nut thread lower flank that has a (e.g. continuously) decreasing width may extend along approximately 1/3 of the circumference of the drive nut.

The drive nut may be manufactured from a metal material which has a hardness lower than the hardness of the threaded screw in order to further facilitate a controlled wear of the underside of the nut thread lower flank against the irregularity.

The drive nut may have a hardness of 50 - 100 HB. The threaded screw may have a hardness higher than 100 HB, such as 150 - 300 HB.

The outer thread of the threaded screw and the inner thread of the drive nut may be corresponding trapezoidal threads, mutually configured such that when the outer thread of the threaded screw engages the inner thread of the drive nut, the screw thread crest touches the nut thread bottom before the upper and lower nut thread flanks and the upper and lower screw flanks touches each other. Thereby the vibrations that are caused when the drive nut runs up and down the threaded screw may be eliminated.

The drive nut may comprise an upper conical portion that widens in direction from a nut center axis towards the upper nut end, and the width of the nut thread lower flank may decrease within the upper conical portion, in direction from the lower nut end towards the upper nut end. The provision of the conical portion may be advantageous for achieving the decreasing width of the nut thread lower flank. The conical portion may be achieved by a machining process that is available at relatively low cost.

As is to be apprehended, the conical portion needs only be made in the threads of the drive nut, not the goods that radially surrounds the threads.

The decreasing width of the nut thread lower flank may be achieved by other measures than by forming a conical portion. For example, the drive nut may comprise an upper portion within which the width of the inner thread decreases in direction from the lower nut end towards the upper nut end. The width of the inner thread may continuously decrease from a nominal width to a reduced width at the upper nut end, the reduced width may be zero.

The present disclosure further relates to an arrangement of a drive nut as described above and a threaded screw for a platform elevator, wherein the threaded screw comprises an outer thread having a screw thread bottom, a screw thread upper flank, a screw thread lower flank and a screw thread crest. In addition, the present disclosure relates to a platform elevator comprising a drive nut and a threaded screw as described above. Such an arrangement and such a platform elevator ensure a controlled wear of the nut thread against an irregularity formed between adjacent screw sections.

In a further aspect, the present disclosure relates to a method of adapting a platform elevator drive nut as described above a threaded screw of a platform elevator as described above. The method comprises operating the platform elevator such that the drive nut passes an interface between adjacent sections of the threaded screw of the platform elevator. The method may comprise operating the platform elevator such that the drive nut passes the interface at least two times. Typically, no more than four passages are required for adapting the platform drive nut, i.e. finalising the method. In a further aspect, the present disclosure related to a similar use of the drive nut. Typically, the drive nut of such a method and such a use has a hardness of 50 - 100 HB whereas the threaded screw has a hardness of 150 - 300 HB.

According to a further aspect of the present disclosure at least one of the above objects are met by a drive nut 50 for moving a platform 14 of a platform elevator 10, said platform elevator 10 comprising a platform 14 and a threaded screw 20, 60 with an outer thread 30, 70 having a screw thread bottom 34, 74; a screw thread upper flank 35, 75; a screw thread lower flank 36, 76 and a screw thread crest 37, 77; wherein the drive nut 50 is configured to be turnably arranged on the threaded screw 20, 60 and to support the platform 14, wherein the drive nut 50 comprises:
- an upper nut end 51 and an opposite lower nut end 52, and;
- an inner thread 53 extending between the upper and lower nut ends 51,52 and configured to engage the outer thread 30, 70 of the threaded screw 20, 60, said at least one inner thread 53 having a nut thread bottom 54, a nut thread upper flank 55, a nut lower thread flank, 56 and a nut thread crest 57, wherein;
- the outer thread 30, 70 of the threaded screw 20, 60 and the inner thread 53 of the drive nut 50 are corresponding trapezoidal threads, mutually configured such that when the outer thread 30, 70 of the threaded screw 20, 60 engages the inner thread 53 of the drive nut 50, the screw thread crest 37, 77 touches the nut thread bottom 54 before the upper and lower nut thread flanks 55, 56 and the upper and lower screw flanks 35, 75; 36, 76 touches each other, wherein,
- the nut 50 comprises an upper conical portion 58 that widens in direction from a nut center axis (X) towards the upper nut end 51, and wherein;
- the width (wl) of the nut thread lower flank 56 decreases within the upper conical portion 58, in direction from the lower nut end 52 towards the upper nut end 51.

The provision of a conical portion is advantageous for achieving the decreasing width of the nut thread lower flank 56. The conical portion may advantageously be achieved by available machining processes that are available at relatively low cost.

The axial extension of the conical portion 58, in direction of the lower nut end 52, may be limited by a lower conical limitation line 58.1 on the nut thread crest 57. The length and inclination of the conical portion makes possible to control the narrowing angle of the nut thread lower flank 56 and its radial extension.

Typically, the width (wl) of the nut thread lower flank 56 decreases from a nominal thread flank width (wn) to an apex 56.2 between the nut lower flank edge 56.1 and the conical surface 58.2. This facilitates further smooth entering of the nut thread lower flank onto the screw thread of the consecutive screw segment.

The width (wu) of the nut thread upper flank 55 may also decrease within the upper conical portion 58, in direction from the lower nut end 52 towards the upper nut end 51. Typically, the width (wu) of the nut thread upper flank 55 decreases from a nominal thread flank width to an apex between the nut upper flank edge 55.1 and the nut thread bottom 54.

The apex of the nut thread upper flank 55 may be located before the apex 56.2 of the nut thread lower flank 56 in direction from the upper nut end 51 towards the lower nut end 52. This allows for exposure of a portion of the nut thread upper flank 55.

The drive nut 50 may comprise a lower conical portion 59 that widens in direction from a nut center axis (X) towards the lower nut end 52, wherein, the width (wl) of the nut thread lower flank 56 decreases within the lower conical portion 59, in direction from the upper nut end 51 towards the lower nut end 52.

Typically, the drive nut 50 is manufactured from a metal material which has a hardness lower than the hardness of the threaded screw 60. Typically, the hardness of the threaded screw is 150 - 300 HB, or 200 - 250 HB. The threaded screw may be manufactured of steel and, as an example, have a hardness of 229 HB. The drive nut 50 may have a hardness of 50 - 100 HB or 70 - 90 HB. The drive nut may be manufactured of brass and, as an example, have a hardness of 86 HB. The hardness difference facilitates the controlled wear of the nut thread lower flank against the edge like interface between the first and the second screw section. It thereby further improves adaptation of the drive nut to any interface between screw sections of the threaded screw.

The present disclosure also relates to an arrangement of a drive nut 50 as disclosed above and a threaded screw 60 for a platform elevator 10, said threaded screw 60 comprising an outer thread 70 configured for mutual engagement with the inner thread 53 of the drive nut 50 and having:
- a first and a second screw section 61a, 61b respectively having an outer thread section 70a, 70b extending between a first screw end 62a, 62b and a second screw end 63a, 63b, said thread sections 70a, 70b having a bottom 74a, 74b, an upper flank 75a 75b, a lower flank 76b and a crest 77a, 77b, wherein;
- an end portion of the thread section 70b at the first end 62b of the second screw section 61b is beveled such that the width (wsu) of the upper flank 75b of said thread section 70b narrows in direction towards the first end 62b of the second screw section 61b.

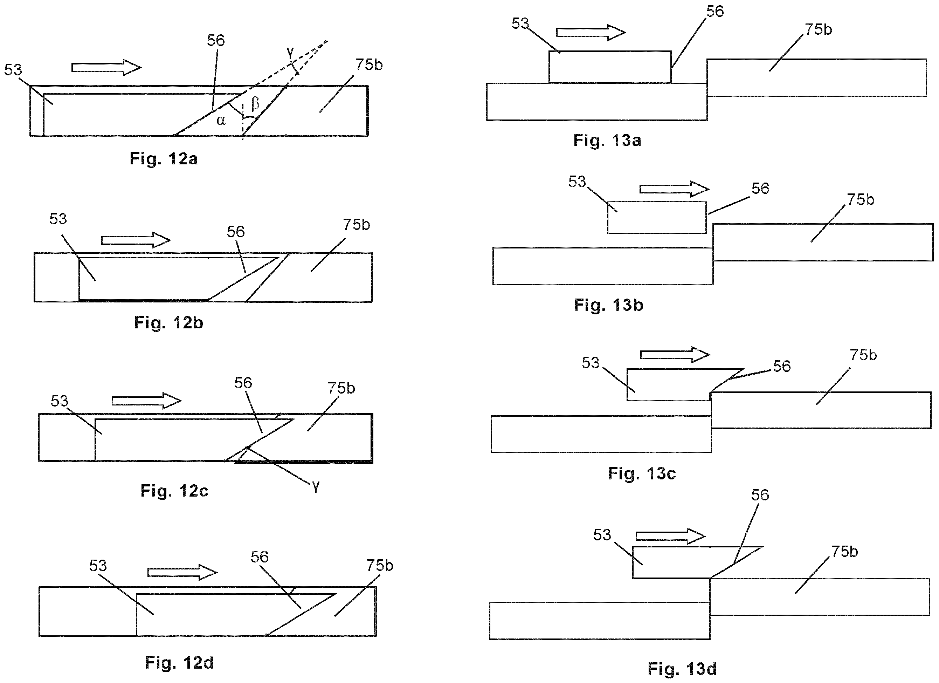

In the arrangement, both the width of the nut thread lower flank 56 and the width of the upper flank 75b of the second screw section 61b of the threaded screw 60 decreases. This results in an even smaller contact area between the nut thread lower flank 56 and the upper flank 75b the second screw section 61b of the threaded screw 60. The result is a smoother entering of the nut thread lower flank 56 onto the upper flank 75b of the second screw section 61b of the threaded screw 60. In addition, the controlled wear of the nut thread lower flank 56 is improved. Typically, as shown in a simplified, schematic manner in figures 12a- 12d, the width of the lower flank 56 decreases by an angle (α) and the width of the upper flank 75b of the first thread section 70b of the second screw section 61b decreases by an angle (β). The angles (α) and (β) should be different from each other. This is particular important when the second screw section 61b is overturned. Angle (α) and angle (β) will form a cutting angle (γ) that will wear down the nut flank in such way that the irregularities in the interface between screw sections adapt the nut. It is emphasized that figures 12a - 12d and 13a - 13d are schematic and merely provided to facilitate the understanding of the invention.

### Brief description of the drawings

- Fig. 1a-c:: A drive nut and a screw according to the prior-art, and engagement there between.
- Fig. 2a-b:: Engagement between a drive nut and a screw according to the prior-art.
- Fig. 3:: A platform elevator comprising a drive nut according to the present disclosure.
- Fig. 4a-b:: A threaded screw for a platform elevator.
- Fig. 5a-c:: Steps of a method for manufacturing a drive nut according to the present disclosure.
- Fig. 6:: A first cross-sectional view of a drive nut according to the present disclosure.
- Fig. 7:: A second cross-sectional view of a drive nut according to the present disclosure.
- Fig. 8:: Two threaded screw sections according to the present disclosure.
- Fig. 9a:: An enlarged portion of a screw section according to the present disclosure.
- Fig. 9b:: A further enlarged portion of a threaded screw according to the present disclosure.
- Fig. 10a-d:: Top views schematically showing engagement between a drive nut according to the present disclosure and the interface between two threaded screw sections.
- Fig. 11a-d:: Side views schematically showing engagement between a drive nut according to the present disclosure and the interface between two threaded screw sections.
- Fig. 12a-d:: Top views schematically showing engagement between a drive nut according to the present disclosure and the interface between two threaded screw sections in arrangement according to the present disclosure.
- Fig. 13a-d:: Side views schematically showing engagement between a drive nut according to the present disclosure and the interface between two threaded screw sections.
- Fig. 14:: A cross-sectional view of a realisation of drive nut according to the present disclosure similar to the one of figures 6 and 7.
- Fig. 15:: A cross-sectional view of an alternative realisation of a drive nut according to the present disclosure.

### Detailed description of embodiments

The drive nut for a platform elevator according to the present disclosure will now be described more fully hereinafter. The drive nut for a platform elevator according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description. In the following, the drive nut for a platform elevator will be denominated "the drive nut".

Further, in following description, any references to direction or positions or orientation are in relation to a horizontal surface, such as a horizontal ground surface.

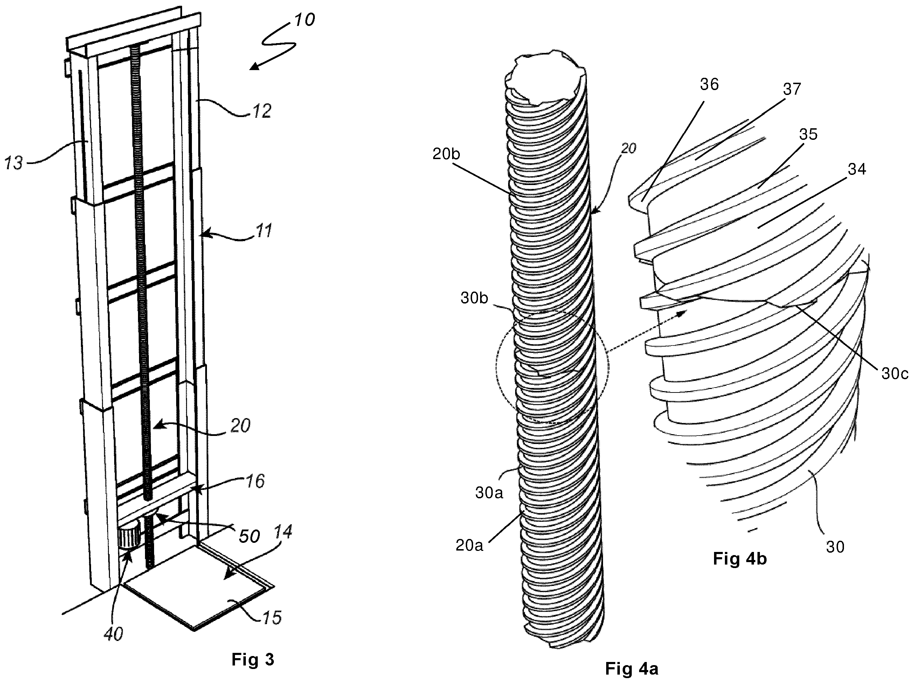

Figure 3 shows schematically a platform elevator 10. The platform elevator 10 comprises a support structure 11 which may be installed in a building structure. The support structure 11 may be arranged to extend substantially vertically between a lower and upper level of a building that the elevator 10 is intended to serve. The support structure 11 comprises two substantially straight guide rails 12, 13 that guide the elevator platform 14 during movement between the different levels. The guide rails 12, 13 may preferably be secured in the building structure to provide the desired rigidity to the installation.

The elevator platform 14 may further comprise a substantially flat platform floor 15 for persons or goods and a platform support 16 that is extending in vertical direction from the platform floor between the two guide rails 12, 13 of the support structure 11.

The elevator platform 14 is movably arranged in vertical direction and the movement is generated by a vertically arranged threaded screw 20 arranged between the two guide rails 12, 13 of the support structure 11, a drive nut 50 with a corresponding inner thread is arranged on the threaded screw 20 such that the drive nut 50 bears on the lower surface of the platform support 16.

The threaded screw 20 is shown in figure 4a and may comprise least a first and a second screw section 20a, 20b. Each screw section 20a, 20b is provided with an outer thread section 30a, 30b which, when the screw 20 is assembled, form the outer thread 30 of the screw 20 (see figure 4b).

Figure 4b shows an enlarged view of the encircled area of figure 4a. Thus, the threaded screw 20 comprises an outer thread 30 which comprises a screw thread bottom 34, a screw thread crest 37, a screw thread upper flank 35 and a screw thread lower flank 36.

The screw sections 20a, 20b are produced with high precision but it is almost impossible to achieve a perfect fit between the threads of adjacent screw sections. Even a small angular misalignment in the interface between adjacent screw sections will cause an irregularity in the threads which is illustrated in figure 4b where the interface 30c of the screws where adjacent sections meet is enlarged to more clearly illustrate the irregularity. Typically, the irregularity in the interface 30c is a leap in vertical direction between the end of the thread 30a of the first screw section 20a and the end of the thread 30b of the second screw section 20b. The leap may form a sharp cutting edge. The screw sections 20a, 20b could be joined together in different ways like for example a male-female configuration comprising a threaded section extending from the end surface of one screw section and a corresponding recess with internal threads formed in the end surface of the adjacent screw section.

Returning to figure 3. A motor 40, such as an electrical motor is arranged on the platform support 16 to rotate the nut 50 around the elongated screw 20 to move the elevator platform along the screw to the different levels. The electrical motor 40 rotates the drive nut 50 to move the elevator platform 14 along the screw and stops the rotation at the selected level. The elevator furthermore comprises a braking arrangement (not shown) that is intended to ensure that the elevator platform remains at the selected level even though the electrical motor is turned off.

The platform elevator 10 further comprises a number of different components such as for example user interface for the operator to start and select the desired level, control units, cables for powering the electrical motor etc. that are not illustrated in the schematic illustration but these components are well known within this technical field and not relevant for the present invention.

In the following, the drive nut 50 according to the present disclosures will be described in more detail.

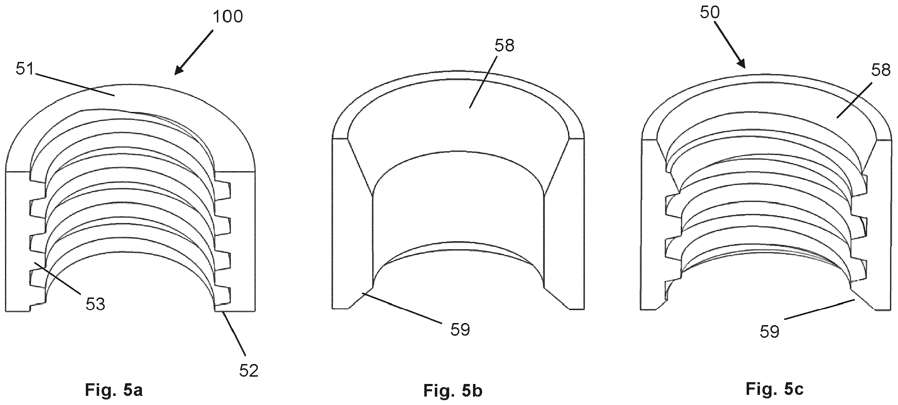

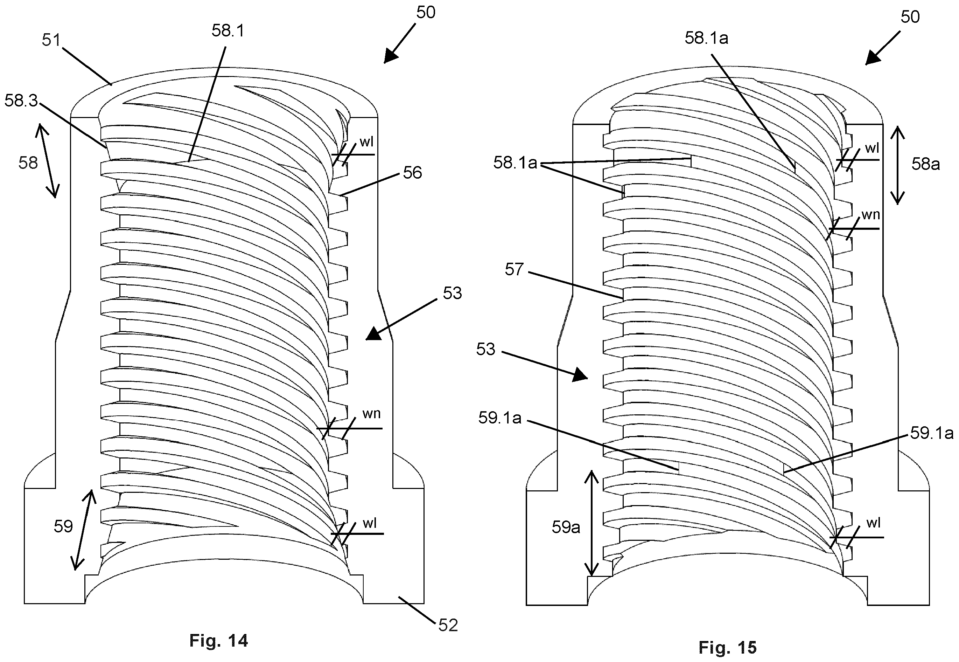

Figure 5a - 5c shows schematically an exemplary manufacturing process for achieving the drive nut 50 according to the present disclosure (excluding the embodiment of figure 15).

Thus, in a first step a drive nut 100 precursor is provided. The drive nut precursor is a rotationally cylindrical drive nut with a single inner thread 53 that extends between opposite first and second nut ends 51, 52. Turning to figure 5b, the nut precursor 100 is subjected to a machining operation which forms a conical portion 58 that extends from the first nut end 51 towards the second nut end 52 and that widens outwards in direction from the second nut end 52 towards the first nut end 51. By machining, a corresponding conical portion 59 is also made to extend from the second end 52 of the nut precursor. In figure 5b, the inner thread 53 has been omitted to elucidate the conical portion. Machining may be performed by turning. Figure 5c shows the final drive nut 50. Thus, during machining of the conical portions 58, 59, a portion of the thread 53 is removed which results in that the width the nut thread lower flank decreases within the upper conical portion 58, and within the lower conical portion 59.

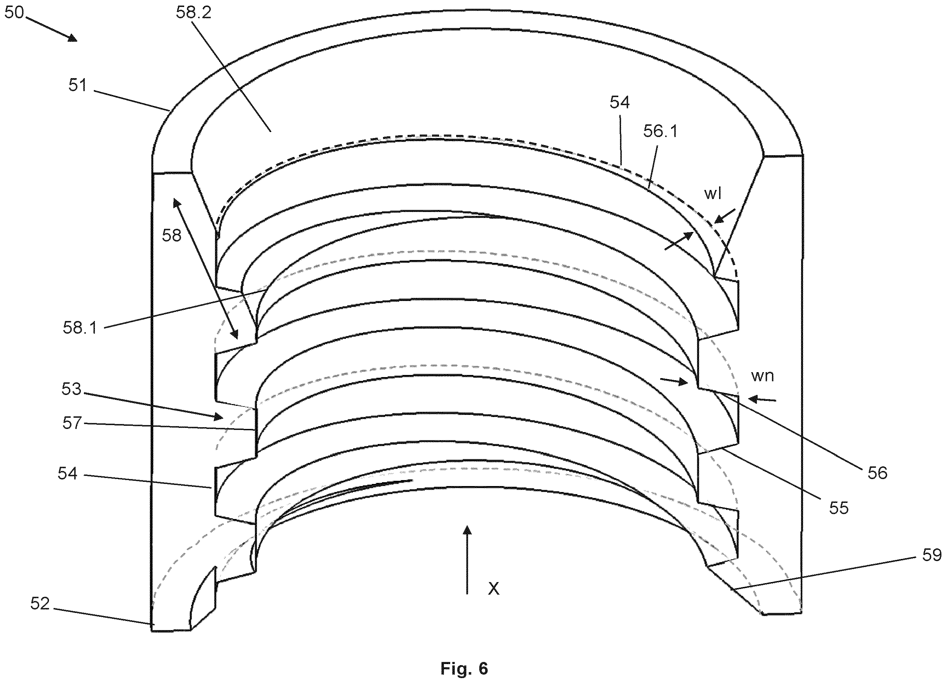

Figure 6 shows an enlarged cross-sectional view of a drive nut 50 after a machining process as described under figure 5a - 5c. The drive nut 50 comprises an upper nut end 51, and a lower nut end 52. The drive nut 50 further comprises a single inner thread 53, which comprises a nut thread bottom 54, a nut thread crest 57, a nut thread upper flank 55 and a nut thread lower flank 56. The inner thread 53 has nominal flank width (nw) which is measured from the nut thread bottom 54 to the nut thread crest 57. The nominal flank width of the nut may be the maximum flank width of the nut, both with regards to the upper flank 55 and to the lower flank 56. The drive nut 50 may have outer axial grooves (not shown).

According to the present disclosure, the drive nut 50 comprises an upper conical portion 58 that widens outwards in direction from a nut center axis (X) towards the upper nut end 51. In axial direction, towards the second end 52 of the drive nut, the upper conical portion 58 is limited by a lower conical limitation line 58.1. The conical limitation line 58.1 is convex, i.e. it protrudes towards the center of the drive nut. Further according to the present disclosure, the width (wl) of the nut thread lower flank 56 decreases within the upper conical portion 58 of the drive nut 50, in direction from the lower nut end 52 towards the upper nut end 51. Thus, a portion of the nut thread lower flank 56 in the vicinity of the upper nut end 51 has a continuously decreasing width (wl).

The portion of the nut thread lower flank 56 with decreasing flank width (wl) has a lower flank edge 56.1. The lower flank edge 56.1 extends between the nut thread lower flank 56 with decreasing width (wl) and an upper conical surface 58.2. The upper conical surface 58.2 forms part of the conical portion 58, and extends between the lower flank edge 56.1 and the first nut end 51.

In figure 6, the width (wl) of the nut thread lower flank 56 with decreasing width may be determined as the distance between the nut thread bottom 54 and the nut lower flank edge 56.1.

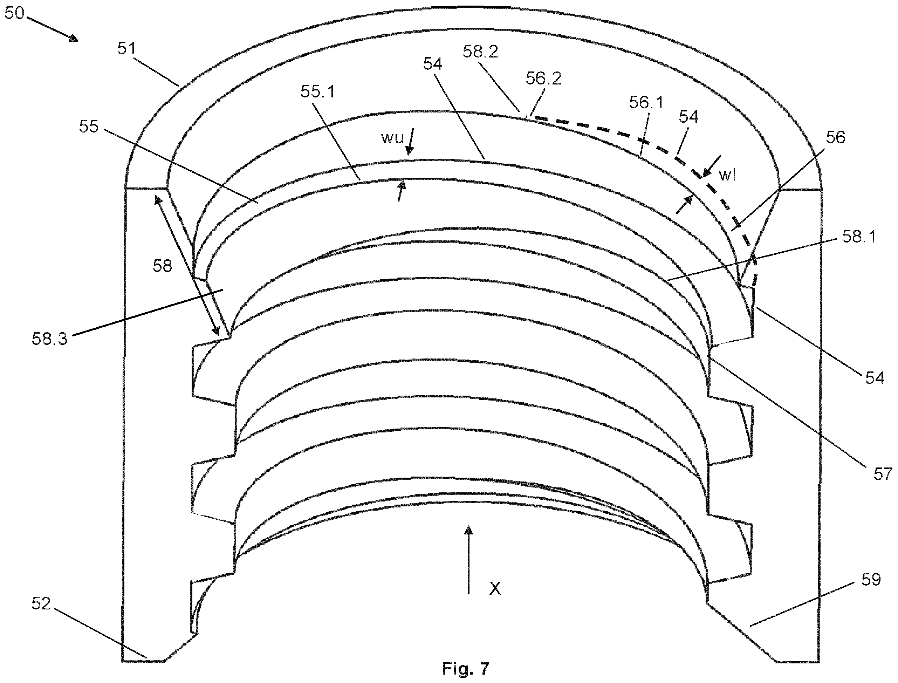

Figure 7 shows a further enlarged cross-sectional view of the drive nut 50 after a machining process as described under figure 5a - 5c. However, to elucidate further features, figure 7 is cut in an angle different from figure 6. Thus, in figure 7 is illustrated that the width (wl) of the nut thread lower flank 56 decreases from nominal flank width (wn) of the nut thread 53 to an apex 56.2, i.e. a point, between the nut thread bottom 54, the lower flank edge 56.1 and the upper conical surface 58.2. By varying the length and angle of the conical portion 58 it is possible to control the length of the nut thread lower flank 56 with decreasing flank width (wl). It is also possible to control how much the flank width (wl) decreases per length unit of the thread 53.

Figure 7 also shows that the width of the nut thread upper flank 55 (wu) decreases within the upper conical portion 58 of the drive nut 50, in direction from the lower nut end 52 towards the upper nut end 51. Also the width (wu) of the nut thread upper flank 55 may decrease from nominal flank width (wn) of the nut thread 53 to an apex, i.e. a point, between the nut thread bottom 54, the upper flank edge 55.1 and a conical surface 58.3 that extends from the upper flank edge 55.1 in direction of the second nut end 52. This apex is not shown in figure 7.

A conical portion 59 may also extend from the lower end 52 of the drive nut 50. Within the conical portion 59, the nut lower thread flank 56 has the same configuration as described above with reference to the conical portion 58 in the upper nut end 51.

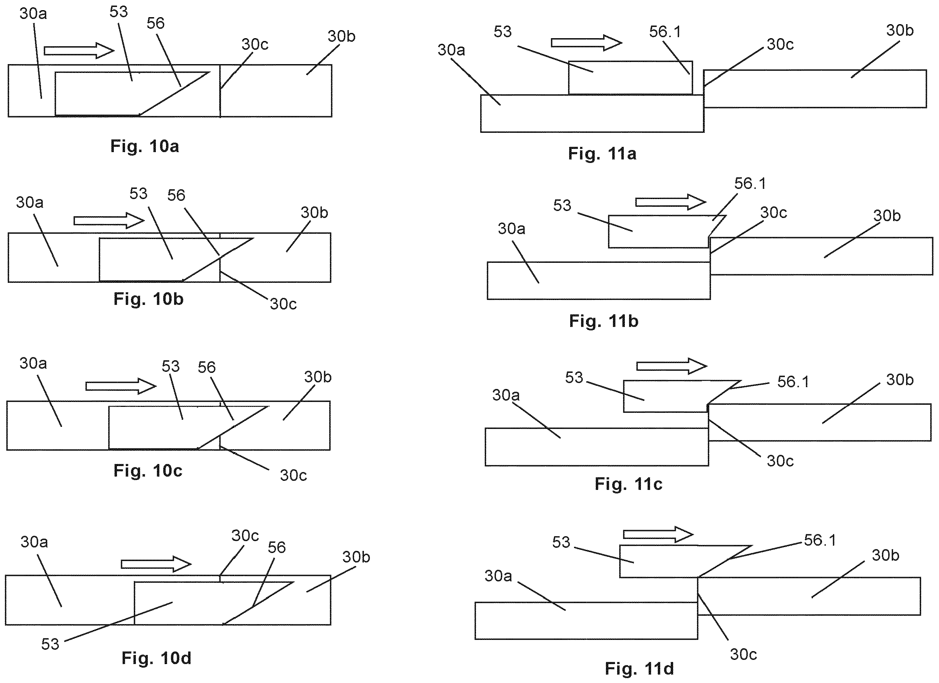

The advantage of the drive nut 50 according to the present disclosure will in the following be described with reference to figures 10a - 10d and 11a - 11d. These figures are simplified functional figures with straightened thread for easier understanding of the function and effect of drive nut according to the present disclosure.

Figures 10a - 10d show, in a view from above, a situation in which the portion of the nut thread lower flank 56 with decreasing width (wl) enters the interface 30c between the thread section 30a and 30b of a first and second screw section 20a, 20b as shown in figure 4a. In the figures 10a - 10d only the interface 30c and the second thread section 30b is visible. Thanks to decreasing width of the nut thread lower flank 56, only a small portion of the nut thread lower flank 56 and the interface 30c will be in contact during entering of the nut thread lower flank 56 onto the second thread portion 30b. This will result in less resistance and higher surface pressure and thus in cutting wear of the nut thread lower flank 56 when it moves over a screw section interface where the upper screw section is overturned.

Figures 11a - 11d show the situation illustrated in figures 10a - 10d in a side view. Here, a further advantage of the drive nut according to the present disclosure becomes apparent. Namely, during engagement between the nut thread lower flank 56 and the step formed interface 30c, the nut thread lower flank 56 is subjected to wear from the interface 30c. The wear results in that the nut thread lower flank 56, in merely a few passes, is worn down to an extent at which the nut thread lower flank 56 is adapted to the step of the interface 30c of the threaded screw. This makes possible to rapidly adapt the drive nut for smooth running with regards to any individual overturned or under-turned interface between the threaded screw sections.

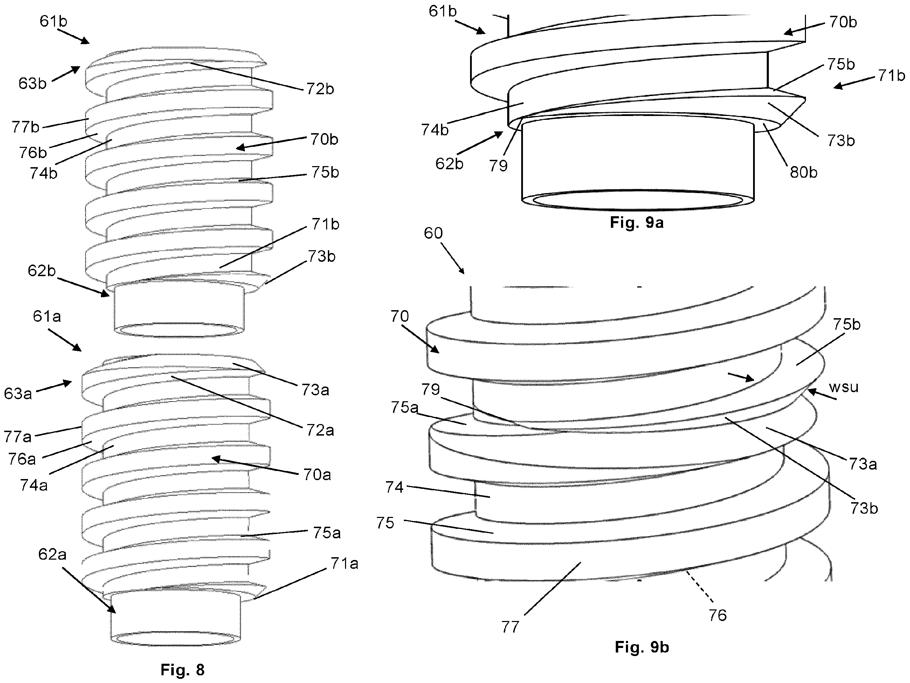

Figures 8 and 9a, 9b show a threaded screw 60 according to an aspect of the present disclosure. The threaded screw 60 may be used together with the drive nut 50 according to the first aspect of the present disclosure.

Turning to figure 8, the threaded screw 60 comprises at least a first and a second screw section 61a, 61b. The first screw section 61a has a first end 62a and second end 63a. The first screw section 61a further has an outer thread section 70a which extends between the first and second screw end 62a, 63a. The thread section 70a has a first thread end portion 71a at the first end 62a of the screw section 61a and a second thread end portion 72a at the second end 63a of the screw section 61a.

The second screw section 61b has a first end 62b and second end 63b. The second screw section 61b further has an outer thread section 70b which extends between the first and second screw end 62b, 63b. The thread section 70b has a first thread end portion 71b at the first end 62b of the screw section 61b and a second thread end portion 72b at the second end 63b of the screw section 61b.

The thread sections 70a and 70b have respectively a thread bottom 74a, 74b, a thread upper flank 75a, 75b, a thread lower flank 76a, 76b and a thread crest 77a, 77b.

The first and the second screw sections 61a, 61b are inter-connectable. A first end 62b of the second screw section 61b may be connected to a second end 63a of the first screw section 61a and form a threaded screw 60 (not shown in figure 8).

Figure 9b shows a section of a threaded screw 60 that is formed by interconnection of the first and second screw section 61a and 61b. The screw 60 has an outer thread 70 with a thread bottom 74 an upper thread flank 75, a lower thread flank 76 and a thread crest 77. In figure 9b, the lower thread flank 76 is not visible, due to the perspective, however it is indicated by a dashed arrow.

Returning to figure 8. According to the present disclosure, the first end portion 71b of the thread section 70b of the second screw section 61b is beveled, i.e. it comprises a bevel 73b. Further according to the present disclosure, the second end portion 72a of the thread section 70a of the first screw section 61a is beveled, i.e. it comprises a bevel 73a.

Figure 9a shows an enlarged view of the first end 62b of the second screw section 61b. Thus, the first end portion 71b of the thread section 70b of the second screw section 61b is beveled such that the width of the upper thread flank 75b of the second screw section 61b narrows in radial direction towards the first end 62b of the second screw section 61b. Figure 9b shows in detail how the width (wsu) of the upper thread flank 75b of the second screw section narrows. Returning to figure 9a, the bevel 73b may extend in axial direction between the upper thread flank 75b and an abutment surface 80b of threaded section 70b. The abutment surface 80b is configured to bear against a corresponding abutment surface of the first screw section (not shown). The width (wsu) of the upper thread flank 75b may terminate at an apex 79, i.e.a point, between the bevel 73b, the upper flank 75b, the abutment surface 80b and the thread bottom 74b of the threaded section 70b. Beveling may be achieved by common machining processes, such as grinding or turning.

Turning to Figure 9b which further shows that when the first and the second screw sections 61a, 61b assembled into a threaded screw 60, the end of the bevel 73b of the second screw section 61b extends across the upper flank 75a of the first screw section 61a and terminates into the apex 79 at the screw thread bottom 74b. However, it is appreciated that the apex 79 need not to be at the thread bottom 74b. Figure 9b also shows the bevel 73a and the narrowing upper thread flank 75a of the first screw section 61a. As apparent, the width of the upper flank thread flank 75a narrows in radial direction towards second end 63a of the first screw section 61a. It is appreciated that the thread flanks of the first and second screw section 61a, 61b do not need to be beveled.

The advantage of a screw with screw sections with beveled thread flanks in the ends together with a drive nut according first aspect of the present disclosure will be described with reference to figures 12a - 12d and 13a - 13d. It is again emphasized that figures 12a - 12d and 13a - 13d are schematic and merely provided to facilitate the understanding of the invention. Thus, in the arrangement shown in figures 12a - 12d the width of the screw thread upper flank 75b and the width of the nut thread lower flank 56 decreases continuously. This results in that only a very small portion of the screw thread upper flank 75b and the nut thread lower flank 56 will be in contact as the nut thread lower flank 56 enters onto the upper screw flank 75b. This results in less resistance and higher surface pressure between the nut thread lower flank 56 and screw thread upper flank 75b. As a consequence, the nut thread lower flank is subjected to cutting wear when it moves over the screw section interface. Cutting wear is predominantly achieved when upper screw section is overturned and the drive nut moves upwards. Figures 13a - 13d shows the situation illustrated in figures 12a - 12d in a side view and illustrates the wear of the nut lower flank 56.

Preferably, the angle (α) of the nut thread lower flank 56 and the angle (β) of the upper screw flank 75b, as seen from above, are different from each other. A cutting angle (γ) is defined in the contact between the nut thread lower flank 56 and the upper screw flank 75. The cutting angle equals the angle (β) minus angle (α) of the upper screw flank 75b. It is important that angle (α) and angle (β) are different in order to achieve the cutting angle (γ). It is emphasized that angle (α), (β) and (γ) are schematic and merely provided to facilitate the understanding of the invention.

It is appreciated that, the outer thread 70 of the threaded screw 60 and the inner thread 53 of the drive nut 50 may be corresponding trapezoidal threads, mutually configured such that when the outer thread 70 of the threaded screw 60 engages the inner thread 53 of the drive nut 50 the thread crest 77 of the threaded screw touches the nut thread bottom 54 before the upper and lower nut thread flanks 55, 56 and the upper and lower flanks 75, 76 of the threaded screw touches each other. It is further appreciated that the drive nut 50 and the threaded screw 60 have been described with merely one thread each. However, it is appreciated, the drive nut 50 and the screw 60 may comprise more than one thread each. For example, seven threads each.

It is further appreciated that the threaded screw 60 may comprise more than two screw sections 61a, 61b.

Figure 14 shows an example of an actual realisation of a platform elevator drive nut 50. The drive nut 50 of figure 14 comprises multiple threads, i.e. more than one thread. The thread of the drive nut (and the cooperating screw sections) is thus not a single-start thread but a multi-start thread. More precisely, the drive nut illustrated in figure 14 comprises six threads.

At the lower nut end 52 there is shown a flange structure that protrudes radially and axially. The flange structure is connected to other components of the platform elevator and is not discussed in further detail in the present disclosure.

The threads 53 of the drive nut 50 of figure 14 are similar to the single tread 53 of the drive nut illustrated in figures 6 and 7. That is to say, the drive nut of figure 14 also comprises an upper conical portion 58 (and a lower conical portion 59) that widens outwards in direction from a nut center axis towards the upper nut end 51. In axial direction, towards the second end 52 of the drive nut, the upper conical portion 58 is limited by a lower conical limitation line 58.1. The width (wl), i.e. radial extension, of the nut thread lower flank 56 decreases within the upper conical portion 58 of the drive nut 50 of figure 14, in direction from the lower nut end 52 towards the upper nut end 51. Thus, a portion of the nut thread lower flank 56 in the vicinity of the upper nut end 51 has a continuously decreasing width (wl).

As a result, there is a small contact area and a high surface pressure between the nut thread lower flank 56 and the above-described irregularity between adjacent sections 20a, 20b; 61a, 61b of the threaded screw 20; 60, such that controlled wear of the underside of the nut thread lower flank 56 against the irregularity is facilitated as has been described above.

Figure 15 shows another example of an actual realisation of a platform elevator drive nut 50. The drive nut of figure 15 differs from the drive nut of figure 14 only in how the decreasing width (wl) of the nut thread lower flank 56 is accomplished.

The drive nut 50 of figure 15 comprises inner threads 53 of decreasing width, i.e. decreasing radial extension, in the vicinity of the upper nut end 51. Thus, also the width (wl) of the nut thread lower flank 56 decreased in the vicinity of the upper nut end. In the example of figure 15, the individual threads have been formed with a decreasing width. The nut thread crests 57 are aligned with the axial direction of the drive nut along the entire length of the drive nut, whereas the drive nut of figure 14 comprises a conical surface 58.3 as has been described with reference to figure 7.

The inner threads 53 of decreasing width of figure 15 are provided without any conical portion being formed in the upper (or lower) nut end 51. Instead of an upper conical portion 58, the drive nut of figure 15 comprises an upper portion 58a, or upper adjusted portion 58a. By the term "adjusted" is meant that the inner threads 53 of the drive nut 50 that extend through the upper adjusted portion 58a (and lower adjusted portion 59a) are shaped such that the nut thread lower flank 56 has a decreasing width (wl), which results in a small contact area and a high surface pressure between the nut thread lower flank 56 and the above-described irregularity formed by an angular misalignment between adjacent screw sections.

The vertical lines 58.1a, 59.1a across the inner threads 53 of the drive nut of figure 15 mark the beginning of the decreasing width of the individual threads within the upper and lower adjusted portion 58a, 59a (or upper and lower portions 58a, 59a). In the example of figure 15, the width (radial extension) of each inner thread 53 within the adjusted portions 58a, 59a continuously decreases to approximately one fifth nominal thread flank width (wn). Three thread starts are shown in figure 15, see top drive nut surface.

As is indicated in figure 15, each inner thread 53 has a nominal width (wn) at the proximal ends of the adjusted portions 58a, 59a and a decreased width (wl) at the distal ends of the adjusted portions 58a, 59a. Preferably, each inner thread 53 decreases to a zero width (not shown) at the distal ends of the adjusted portions 58a, 59a, see the embodiment of figure 14. The proximal ends of the adjusted portions 58a, 59a are directed towards the axial center of the drive nut 50 whereas the distal ends of the adjusted portions 58a, 59a are directed towards the drive nut ends 51, 52.

It is to be noted that the same reference signs have been used for most elements in figures 14 and 15 even though the show two different embodiments. For example, the drive nut is denoted 50 in both figures, even though the decreasing widths (wl) of the nut thread lower flank 56 have been accomplished in different manners. All elements of the drive nut of figure 15 that are also present in figure 14 could in alternative be furnished with a prime, such that the drive nut of figure 15 would be denoted 50' and so on.

## Claims

1. A method of adapting a platform elevator drive nut (50) to a threaded screw (20; 60) of a platform elevator (10), the method comprising operating the platform elevator (10) such that the drive nut (50) passes an interface (30c) between adjacent sections (20a, 20b; 61a, 61b) of a threaded screw (20; 60) of the platform elevator (10), wherein the drive nut (50) is adapted for moving a platform (14) of the platform elevator (10), said platform elevator (10) comprising a platform (14) and said threaded screw (20; 60) comprising an outer thread (30; 70) having a screw thread bottom (34; 74), a screw thread upper flank (35; 75), a screw thread lower flank (36; 76) and a screw thread crest (37; 77), wherein the drive nut (50) is configured to be turnably arranged on the threaded screw (20; 60) and to support the platform (14), wherein the drive nut (50) comprises:
- an upper nut end (51) and an opposite lower nut end (52), and
- an inner thread (53) extending between the upper and lower nut ends (51, 52) and configured to engage the outer thread (30; 70) of the threaded screw (20; 60), said at least one inner thread (53) having a nut thread bottom (54), a nut thread upper flank (55), a nut thread lower flank (56) and a nut thread crest (57), wherein
- the outer thread (30; 70) of the threaded screw (20; 60) and the inner thread (53) of the drive nut (50) are corresponding trapezoidal threads,
**characterized in that**
- in the vicinity of the upper nut end (51) the nut thread lower flank (56) has a decreasing width (wl), which results in a small contact area and a high surface pressure between the nut thread lower flank (56) and an irregularity formed by an angular misalignment between adjacent sections (20a, 20b; 61a, 61b) of the threaded screw (20; 60), such that wear of the underside of the nut thread lower flank (56) against the irregularity is facilitated, whereby the shape of the nut thread lower flank (56) is adapted to the irregularity.

2. The method according to claim 1, wherein the drive nut (50) and the threaded screw (20, 60) comprise more than one thread each.

3. The method according to claim 1, wherein the drive nut (50) and the threaded screw (20, 60) comprise five, six, seven or eight threads.

4. The method according to any preceding claim, wherein the pitch of the inner thread (53) is 5 to 10 mm.

5. The method according to any preceding claim, wherein the portion of the nut thread lower flank (56) that has a decreasing width extends along approximately 1/5 to 1/2 of the circumference of the drive nut (50), such as approximately 1/3 of the circumference of the drive nut (50).

6. The method according to any preceding claim, wherein the drive nut (50) is manufactured from a metal material which has a hardness lower than the hardness of the threaded screw (20; 60).

7. The method according to any preceding claim, wherein the drive nut (50) has a hardness of 50 - 100 HB.

8. The method according to any preceding claim, wherein the outer thread (30; 70) of the threaded screw (20; 60) and the inner thread (53) of the drive nut (50) are corresponding trapezoidal threads, mutually configured such that when the outer thread (30; 70) of the threaded screw (20; 60) engages the inner thread (53) of the drive nut (50), the screw thread crest (37; 77) touches the nut thread bottom (54) before the upper and lower nut thread flanks (55; 56) and the upper and lower screw thread flanks (35, 75; 36, 76) touches each other.

9. The method according to any preceding claim, wherein the drive nut (50) comprises an upper conical portion (58) that widens in direction from a nut center axis (X) towards the upper nut end (51), and the width (wl) of the nut thread lower flank (56) decreases within the upper conical portion (58), in direction from the lower nut end (52) towards the upper nut end (51).

10. The method according to any one of claims 1-8, wherein the drive nut (50) comprises an upper portion (58a) within which the width of the inner thread decreases in direction from the lower nut end (52) towards the upper nut end (51).

11. Use of a drive nut (50) in a platform elevator (10) that comprises a threaded screw (20; 60) on which the drive nut (50) is to be arranged, wherein the threaded screw (20; 60) comprises at least two adjacent screw sections (20a, 20b; 61a, 61b)
wherein the drive nut (50) is adapted for moving a platform (14) of the platform elevator (10), said platform elevator (10) comprising a platform (14) and said threaded screw (20; 60) comprising an outer thread (30; 70) having a screw thread bottom (34; 74), a screw thread upper flank (35; 75), a screw thread lower flank (36; 76) and a screw thread crest (37; 77), wherein the drive nut (50) is configured to be turnably arranged on the threaded screw (20; 60) and to support the platform (14), wherein the drive nut (50) comprises:
- an upper nut end (51) and an opposite lower nut end (52), and
- an inner thread (53) extending between the upper and lower nut ends (51, 52) and configured to engage the outer thread (30; 70) of the threaded screw (20; 60), said at least one inner thread (53) having a nut thread bottom (54), a nut thread upper flank (55), a nut thread lower flank (56) and a nut thread crest (57), wherein
- the outer thread (30; 70) of the threaded screw (20; 60) and the inner thread (53) of the drive nut (50) are corresponding trapezoidal threads,
**characterized in that**
- in the vicinity of the upper nut end (51) the nut thread lower flank (56) has a decreasing width (wl), which results in a small contact area and a high surface pressure between the nut thread lower flank (56) and an irregularity formed by an angular misalignment between adjacent sections (20a, 20b; 61a, 61b) of the threaded screw (20; 60), such that wear of the underside of the nut thread lower flank (56) against the irregularity is facilitated, whereby the shape of the nut thread lower flank (56) is adapted to the irregularity.

12. An arrangement of a drive nut (50) and a threaded screw (60) for a platform elevator (10), said threaded screw (60) comprising an outer thread (70) configured for mutual engagement with the inner thread (53) of the drive nut (50) and having:
- a first and a second screw section (61a, 61b) respectively having an outer thread section (70a, 70b) extending between a first screw end (62a, 62b) and a second screw end (63a, 63b), said thread sections (70a, 70b) having a bottom (76a, 76b), an upper flank (75a, 75b), a lower flank (76a, 76b) and a crest (77a, 77b),
**characterized in that**;
- an end portion of the thread section (70b) at the first end (62b) of the second screw section (61b) is beveled such that the width (wsu) of the upper flank (75b) of said thread section (70b) narrows in direction towards the first end (62b) of the second screw section (61b),
wherein the drive nut (50) is adapted for moving a platform (14) of the platform elevator (10), said platform elevator (10) comprising a platform (14) and said outer thread (70) having a screw thread bottom (74), a screw thread upper flank (75), a screw thread lower flank (76) and a screw thread crest (77), wherein the drive nut (50) is configured to be turnably arranged on the threaded screw (60) and to support the platform (14), wherein the drive nut (50) comprises:
- an upper nut end (51) and an opposite lower nut end (52), and
- an inner thread (53) extending between the upper and lower nut ends (51, 52) and configured to engage the outer thread (70) of the threaded screw (60), said at least one inner thread (53) having a nut thread bottom (54), a nut thread upper flank (55), a nut thread lower flank (56) and a nut thread crest (57), wherein
- the outer thread (70) of the threaded screw (60) and the inner thread (53) of the drive nut (50) are corresponding trapezoidal threads,
wherein, in the vicinity of the upper nut end (51) the nut thread lower flank (56) has a decreasing width (wl), which results in a small contact area and a high surface pressure between the nut thread lower flank (56) and an irregularity formed by an angular misalignment between adjacent sections (61a, 61b) of the threaded screw (60), such that wear of the underside of the nut thread lower flank (56) against the irregularity is facilitated, whereby the shape of the nut thread lower flank (56) is adapted to the irregularity.

13. The arrangement according to claim 12, wherein an angle (α) of the nut thread lower flank (56) and an angle (β) of the upper flank (75b) of the first thread section (70b) are different from each other.

## Patentansprüche

1. Ein Verfahren zum Anpassen einer Antriebsmutter (50) eines Plattformaufzugs an eine Gewindeschraube (20; 60) eines Plattformaufzugs (10), wobei das Verfahren das Betreiben des Plattformaufzugs (10) umfasst, derart, dass die Antriebsmutter (50) eine Schnittstelle (30c) zwischen benachbarten Abschnitten (20a, 20b; 61a, 61b) einer Gewindeschraube (20; 60) eines Plattformaufzugs (10) passiert,
wobei die Antriebsmutter (50) dafür ausgelegt ist, eine Plattform (14) des Plattformaufzugs (10) zu bewegen, wobei der Plattformaufzug (10) eine Plattform (14) umfasst und die Gewindeschraube (20; 60) ein Außengewinde (30; 70) umfasst, das einen Schraubengewindeboden (34; 74), eine Schraubengewindeoberflanke (35; 75), eine Schraubgewindeunterflanke (36; 76) und eine Schraubengewindespitze (37; 77) aufweist, wobei die Antriebsmutter (50) konfiguriert ist, drehbar an der Gewindeschraube (20; 60) angeordnet zu werden und die Plattform (14) zu tragen, wobei die Antriebsmutter (50) umfasst:
- ein oberes Mutternende (51) und ein gegenüberliegendes unteres Mutternende (52), und
- ein Innengewinde (53), das sich zwischen dem oberen und dem unteren Mutternende (51, 52) erstreckt und konfiguriert ist, mit dem Außengewinde (30; 70) der Gewindeschraube (20; 60) in Eingriff zu treten, wobei das mindestens eine Innengewinde (53) einen Mutterngewindeboden (54), eine Mutterngewindeoberflanke (55), eine Mutterngewindeunterflanke (56) und eine Mutterngewindespitze (57) aufweist, wobei
- das Außengewinde (30; 70) der Gewindeschraube (20; 60) und das Innengewinde (53) der Antriebsmutter (50) entsprechende Trapezgewinde sind,
**dadurch gekennzeichnet, dass**
- die Mutterngewindeunterflanke (56) in der Nähe des oberen Mutternendes (51) eine abnehmende Breite (wl) aufweist, die in einem kleinen Berührungsbereich und einem hohen Oberflächendruck zwischen der Mutterngewindeunterflanke (56) und einer Unregelmäßigkeit, die durch eine Winkelabweichung zwischen benachbarten Abschnitten (20a, 20b; 61a, 61b) der Gewindeschraube (20; 60) gebildet wird, derart resultiert, dass der Verschleiß der Unterseite der Mutterngewindeunterflanke (56) gegen die Unregelmäßigkeit erleichtert wird, wobei die Form der Mutterngewindeunterflanke (56) an die Unregelmäßigkeit angepasst wird.

2. Das Verfahren nach Anspruch 1, wobei die Antriebsmutter (50) und die Gewindeschraube (20, 60) jeweils mehr als einen Gewindegang umfassen.

3. Das Verfahren nach Anspruch 1, wobei die Antriebsmutter (50) und die Gewindeschraube (20, 60) fünf, sechs, sieben oder acht Gewindegänge umfassen.

4. Das Verfahren nach einem vorhergehenden Anspruch, wobei die Steigung des Innengewindes (53) 5 bis 10 mm ist.

5. Das Verfahren nach einem vorhergehenden Anspruch, wobei der Abschnitt der Mutterngewindeunterflanke (56), der eine abnehmende Breite aufweist, sich entlang ungefähr 1/5 bis 1/2 des Umfangs der Antriebsmutter (50), wie beispielsweise 1/3 des Umfangs der Antriebsmutter (50), erstreckt.

6. Das Verfahren nach einem vorhergehenden Anspruch, wobei die Antriebsmutter (50) aus einem Metallmaterial hergestellt wird, das eine Härte aufweist, die kleiner ist als die Härte Gewindeschraube (20; 60).

7. Das Verfahren nach einem vorhergehenden Anspruch, wobei die Antriebsmutter (50) eine Härte von 50-100 HB aufweist.

8. Das Verfahren nach einem vorhergehenden Anspruch, wobei das Außengewinde (30; 70) der Gewindeschraube (20; 60) und das Innengewinde (53) der Antriebsmutter (50) entsprechende Trapezgewinde sind, die wechselseitig derart konfiguriert sind, dass dann, wenn das Außengewinde (30; 70) der Gewindeschraube (20; 60) mit dem Innengewinde (53) der Antriebsmutter (50) in Eingriff tritt, die Schraubengewindespitze (37; 77) den Mutterngewindeboden (54) berührt, bevor die Mutterngewindeober- und unterflanke (55; 56) und die Schraubengewindeober- und unterflanke (35, 75; 36, 76) einander berühren.

9. Das Verfahren nach einem vorhergehenden Anspruch, wobei die Antriebsmutter (50) einen oberen konischen Abschnitt (58) umfasst, der sich in der Richtung von einer Mittelachse (X) der Mutter zu dem oberen Mutternende (51) hin weitet, und die Weite (wl) der Mutterngewindeunterflanke (56) innerhalb des oberen konischen Abschnitts (58) in Richtung von dem unteren Mutternende (52) zu dem oberen Mutternende (51) hin abnimmt.

10. Das Verfahren nach einem der vorhergehenden Ansprüche 1-8, wobei die Antriebsmutter (50) einen oberen Abschnitt (58a) umfasst, innerhalb dessen die Breite des Innengewindes in Richtung von dem unteren Mutternende (52) zu dem oberen Mutternende (51) hin abnimmt.

11. Verwendung einer Antriebsmutter (50) in einem Plattformaufzug (10), der eine Gewindeschraube (20; 60) umfasst, auf der die Antriebsmutter (50) angeordnet werden soll, wobei die Gewindeschraube (20; 60) mindestens zwei benachbarte Schraubenabschnitte (20a, 20b; 61a, 61b) umfasst, wobei die Antriebsmutter (50) dafür ausgelegt ist, eine Plattform (14) des Plattformaufzugs (10) zu bewegen, wobei der Plattformaufzug (10) eine Plattform (14) und die Gewindeschraube (20; 60) umfasst, die ein Außengewinde (30; 70) umfasst, das einen Schraubengewindeboden (34; 74), eine Schraubengewindeoberflanke (35; 75), eine Schraubgewindeunterflanke (36; 76) und eine Schraubengewindespitze (37; 77) aufweist, wobei die Antriebsmutter (50) konfiguriert ist, drehbar an der Gewindeschraube (20; 60) angeordnet zu werden und die Plattform (14) zu tragen, wobei die Antriebsmutter (50) Folgendes umfasst:
- ein oberes Mutternende (51) und ein gegenüberliegendes unteres Mutternende (52), und
- ein Innengewinde (53), das sich zwischen dem oberen und dem unteren Mutternende (51, 52) erstreckt und konfiguriert ist, mit dem Außengewinde (30; 70) der Gewindeschraube (20; 60) in Eingriff zu treten, wobei das mindestens eine Innengewinde (53) einen Mutterngewindeboden (54), eine Mutterngewindeoberflanke (55), eine Mutterngewindeunterflanke (56) und eine Mutterngewindespitze (57) aufweist, wobei
- das Außengewinde (30; 70) der Gewindeschraube (20; 60) und das Innengewinde (53) der Antriebsmutter (50) entsprechende Trapezgewinde sind,
**dadurch gekennzeichnet, dass**
- die Mutterngewindeunterflanke (56) in der Nähe des oberen Mutternendes (51) eine abnehmende Breite (wl) aufweist, die in einem kleinen Berührungsbereich und einem hohen Oberflächendruck zwischen der Mutterngewindeunterflanke (56) und einer Unregelmäßigkeit, die durch eine Winkelabweichung zwischen benachbarten Abschnitten (20a, 20b; 61a, 61b) der Gewindeschraube (20; 60) gebildet wird, derart resultiert, dass der Verschleiß der Unterseite der Mutterngewindeunterflanke (56) gegen die Unregelmäßigkeit erleichtert wird, wobei die Form der Mutterngewindeunterflanke (56) an die Unregelmäßigkeit angepasst wird.

12. Eine Anordnung einer Antriebsmutter (50) und einer Gewindeschraube (60) für einen Plattformaufzug (10), wobei die Gewindeschraube (60) ein Außengewinde (70) umfasst, das für den wechselseitigen Eingriff mit dem Innengewinde (53) der Antriebsmutter (50) eingerichtet ist und aufweist:
- einen ersten und zweiten Schraubenabschnitt (61a, 61b), die jeweils einen Außengewindeabschnitt (70a, 70b) aufweisen, der sich zwischen einem ersten Schraubenende (62a, 62b) und einen zweiten Schraubenende (63a, 63b) erstreckt, wobei die Gewindeabschnitte (70a, 70b) einen Boden (76a, 76b), eine obere Flanke (75a, 75b), eine untere Flanke (76a, 76b) und eine Spitze (77a, 77b) aufweisen,
**dadurch gekennzeichnet, dass**:
- ein Endabschnitt des Gewindeabschnitts (70b) an dem ersten Ende (62b) des zweiten Schraubenabschnitts (61b) derart abgeschrägt ist, dass die Breite (wsu) der oberen Flanke (75b) des Gewindeabschnitts (70b) in Richtung zu dem ersten Ende (62b) des zweiten Schraubenabschnitts (61b) hin enger wird,
wobei die Antriebsmutter (50) dafür ausgelegt ist, eine Plattform (14) des Plattformaufzugs (10) zu bewegen, wobei der Plattformaufzug (10) eine Plattform (14) umfasst und das Außengewinde (70) einen Schraubengewindeboden (74), eine Schraubengewindeoberflanke (75), eine Schraubgewindeunterflanke (76) und eine Schraubengewindespitze (77) aufweist, wobei die Antriebsmutter (50) konfiguriert ist, drehbar an der Gewindeschraube (60) angeordnet zu werden und die Plattform (14) zu tragen, wobei die Antriebsmutter (50) Folgendes umfasst:
- ein oberes Mutternende (51) und ein gegenüberliegendes unteres Mutternende (52), und
- ein Innengewinde (53), das sich zwischen dem oberen und dem unteren Mutternende (51, 52) erstreckt und konfiguriert ist, mit dem Außengewinde (70) der Gewindeschraube (60) in Eingriff zu treten, wobei das mindestens eine Innengewinde (53) einen Mutterngewindeboden (54), eine Mutterngewindeoberflanke (55), eine Mutterngewindeunterflanke (56) und eine Mutterngewindespitze (57) aufweist, wobei
- das Außengewinde (70) der Gewindeschraube (60) und das Innengewinde (53) der Antriebsmutter (50) entsprechende Trapezgewinde sind,
wobei die Mutterngewindeunterflanke (56) in der Nähe des oberen Mutternendes (51) eine abnehmende Breite (wl) aufweist, die in einem kleinen Berührungsbereich und einem hohen Oberflächendruck zwischen der Mutterngewindeunterflanke (56) und einer Unregelmäßigkeit, die durch eine Winkelabweichung zwischen benachbarten Abschnitten (61a, 61b) der Gewindeschraube (60) gebildet wird, derart resultiert, dass der Verschleiß der Unterseite der Mutterngewindeunterflanke (56) gegen die Unregelmäßigkeit erleichtert wird, wobei die Form der Mutterngewindeunterflanke (56) an die Unregelmäßigkeit angepasst wird.

13. Die Anordnung nach Anspruch 12, wobei sich ein Winkel (α) der Mutterngewindeunterflanke (56) und ein Winkel (β) der oberen Flanke (75b) des ersten Gewindeabschnitts (70b) voneinander unterscheiden.

## Revendications

1. Procédé d'adaptation d'écrou d'entraînement de monte-charge (50) à une vis filetée (20 ; 60) d'un monte-charge (10), le procédé comprenant le fonctionnement du monte-charge (10) de sorte que l'écrou d'entraînement (50) passe par une interface (30c) entre des sections (20a, 20b ; 61a, 61b) adjacentes d'une vis filetée (20 ; 60) du monte-charge (10),
dans lequel l'écrou d'entraînement (50) est adapté pour déplacer une plate-forme (14) du monte-charge (10), ledit monte-charge (10) comprenant une plate-forme (14) et ladite vis filetée (20 ; 60) comprenant un filet extérieur (30 ; 70) comportant un bas de filet de vis (34 ; 74), un flanc supérieur de filet de vis (35 ; 75), un flanc inférieur de filet de vis (36 ; 76) et un sommet de filet de vis (37 ; 77), dans lequel l'écrou d'entraînement (50) est configuré pour être agencé de manière rotative sur la vis filetée (20 ; 60) et pour supporter la plate-forme (14), dans lequel l'écrou d'entraînement (50) comprend :
- une extrémité supérieure d'écrou (51) et une extrémité inférieure d'écrou (52) opposée, et
- un filet intérieur (53) s'étendant entre les extrémités supérieure et inférieure d'écrou (51, 52) et configuré pour se mettre en prise avec le filet extérieur (30 ; 70) de la vis filetée (20 ; 60), ledit au moins un filet intérieur (53) comportant un bas de filet d'écrou (54), un flanc supérieur de filet d'écrou (55), un flanc inférieur de filet d'écrou (56) et un sommet de filet d'écrou (57), dans lequel
- le filet extérieur (30 ; 70) de la vis filetée (20 ; 60) et le filet intérieur (53) de l'écrou d'entraînement (50) sont des filets trapézoïdaux correspondants,
**caractérisé en ce que**
- à proximité de l'extrémité supérieure d'écrou (51), le flanc inférieur de filet d'écrou (56) présente une largeur décroissante (wl), ce qui engendre une petite zone de contact et une grande pression de surface entre le flanc inférieur de filet d'écrou (56) et une irrégularité formée par un désalignement angulaire entre des sections (20a, 20b ; 61a, 61b) adjacentes de la vis filetée (20 ; 60), de sorte qu'une usure de la partie inférieure du flanc inférieur de filet d'écrou (56) contre l'irrégularité soit facilitée, de telle manière que la forme du flanc inférieur de filet d'écrou (56) soit adaptée à l'irrégularité.

2. Procédé selon la revendication 1, dans lequel l'écrou d'entraînement (50) et la vis filetée (20, 60) comprennent chacun plusieurs filets.

3. Procédé selon la revendication 1, dans lequel l'écrou d'entraînement (50) et la vis filetée (20, 60) comprennent cinq, six, sept ou huit filets.

4. Procédé selon l'une quelconque des revendications précédentes, dans lequel le pas du filet intérieur (53) est de 5 à 10 mm.

5. Procédé selon l'une quelconque des revendications précédentes, dans lequel la partie du flanc inférieur de filet d'écrou (56) qui présente une largeur décroissante s'étend d'environ 1/5 à 1/2 de la circonférence de l'écrou d'entraînement (50), comme environ 1/3 de la circonférence de l'écrou d'entraînement (50).

6. Procédé selon l'une quelconque des revendications précédentes, dans lequel l'écrou d'entraînement (50) est fabriqué dans un matériau métallique présentant une dureté inférieure à la dureté de la vis filetée (20 ; 60).

7. Procédé selon l'une quelconque des revendications précédentes, dans lequel l'écrou d'entraînement (50) présente une dureté de 50 à 100 HB.

8. Procédé selon l'une quelconque des revendications précédentes, dans lequel le filet extérieur (30 ; 70) de la vis filetée (20 ; 60) et le filet intérieur (53) de l'écrou d'entraînement (50) sont des filets trapézoïdaux correspondants, mutuellement configurés de sorte que, lorsque le filet extérieur (30 ; 70) de la vis filetée (20 ; 60) se met en prise avec le filet intérieur (53) de l'écrou d'entraînement (50), le sommet de filet de vis (37 ; 77) touche le bas de filet d'écrou (54) avant que les flancs supérieur et inférieur de filet d'écrou (55 ; 56) et les flancs supérieur et inférieur de filet de vis (35, 75 ; 36, 76) ne se touchent.

9. Procédé selon l'une quelconque des revendications précédentes, dans lequel l'écrou d'entraînement (50) comprend une partie conique supérieure (58) qui s'élargit dans une direction d'un axe central d'écrou (X) vers l'extrémité supérieure d'écrou (51), et la largeur (wl) du flanc inférieur de filet d'écrou (56) diminue à l'intérieur de la partie conique supérieure (58), dans une direction de l'extrémité inférieure d'écrou (52) vers l'extrémité supérieure d'écrou (51).

10. Procédé selon l'une quelconque des revendications 1 à 8, dans lequel l'écrou d'entraînement (50) comprend une partie supérieure (58a) à l'intérieur de laquelle la largeur du filet intérieur diminue dans une direction de l'extrémité inférieure d'écrou (52) vers l'extrémité supérieure d'écrou (51).

11. Utilisation d'un écrou d'entraînement (50) dans un monte-charge (10) qui comprend une vis filetée (20 ; 60) sur laquelle l'écrou d'entraînement (50) doit être agencé, dans laquelle la vis filetée (20 ; 60) comprend au moins deux sections de vis (20a, 20b ; 61a, 61b) adjacentes,
dans laquelle l'écrou d'entraînement (50) est adapté pour déplacer une plate-forme (14) du monte-charge (10), ledit monte-charge (10) comprenant une plate-forme (14) et ladite vis filetée (20 ; 60) comprenant un filet extérieur (30 ; 70) comportant un bas de filet de vis (34 ; 74), un flanc supérieur de filet de vis (35 ; 75), un flanc inférieur de filet de vis (36 ; 76) et un sommet de filet de vis (37 ; 77), dans lequel l'écrou d'entraînement (50) est configuré pour être agencé de manière rotative sur la vis filetée (20 ; 60) et pour supporter la plate-forme (14), dans laquelle l'écrou d'entraînement (50) comprend :
- une extrémité supérieure d'écrou (51) et une extrémité inférieure d'écrou (52) opposée, et
- un filet intérieur (53) s'étendant entre les extrémités supérieure et inférieure d'écrou (51, 52) et configuré pour se mettre en prise avec le filet extérieur (30 ; 70) de la vis filetée (20 ; 60), ledit au moins un filet intérieur (53) comportant un bas de filet d'écrou (54), un flanc supérieur de filet d'écrou (55), un flanc inférieur de filet d'écrou (56) et un sommet de filet d'écrou (57), dans laquelle
- le filet extérieur (30 ; 70) de la vis filetée (20 ; 60) et le filet intérieur (53) de l'écrou d'entraînement (50) sont des filets trapézoïdaux correspondants,
**caractérisée en ce que**
- à proximité de l'extrémité supérieure d'écrou (51), le flanc inférieur de filet d'écrou (56) présente une largeur décroissante (wl), ce qui engendre une petite zone de contact et une grande pression de surface entre le flanc inférieur de filet d'écrou (56) et une irrégularité formée par un désalignement angulaire entre des sections (20a, 20b ; 61a, 61b) adjacentes de la vis filetée (20 ; 60), de sorte qu'une usure de la partie inférieure du flanc inférieur de filet d'écrou (56) contre l'irrégularité soit facilitée, de telle manière que la forme du flanc inférieur de filet d'écrou (56) soit adaptée à l'irrégularité.

12. Agencement d'un écrou d'entraînement (50) et d'une vis filetée (60) pour un monte-charge (10), ladite vis filetée (60) comprenant un filet extérieur (70) configuré pour se mettre en prise avec le filet intérieur (53) de l'écrou d'entraînement (50) et comportant :
- des première et seconde sections de vis (61a, 61b) comportant respectivement une section extérieure de filet (70a, 70b) s'étendant entre une première extrémité de vis (62a, 62b) et une seconde extrémité de vis (63a, 63b), lesdites sections de filet (70a, 70b) comportant un bas (76a, 76b), un flanc supérieur (75a, 75b), un flanc inférieur (76a, 76b) et un sommet (77a, 77b),
**caractérisé en ce que** :
- une partie d'extrémité de la section de filet (70b) au niveau de la première extrémité (62b) de la seconde section de vis (61b) est biseautée de sorte que la largeur (wsu) du flanc supérieur (75b) de ladite section de filet (70b) se rétrécisse dans une direction vers la première extrémité (62b) de la seconde section de vis (61b),
dans lequel l'écrou d'entraînement (50) est adapté pour déplacer une plate-forme (14) du monte-charge (10), ledit monte-charge (10) comprenant une plate-forme (14) et ledit filet extérieur (70) comportant un bas de filet de vis (74), un flanc supérieur de filet de vis (75), un flanc inférieur de filet de vis (76) et un sommet de filet de vis (77), dans lequel l'écrou d'entraînement (50) est configuré pour être agencé de manière rotative sur la vis filetée (60) et pour supporter la plate-forme (14), dans lequel l'écrou d'entraînement (50) comprend :
- une extrémité supérieure d'écrou (51) et une extrémité inférieure d'écrou (52) opposée, et
- un filet intérieur (53) s'étendant entre les extrémités supérieure et inférieure d'écrou (51, 52) et configuré pour se mettre en prise avec le filet extérieur (70) de la vis filetée (60), ledit au moins un filet intérieur (53) comportant un bas de filet d'écrou (54), un flanc supérieur de filet d'écrou (55), un flanc inférieur de filet d'écrou (56) et un sommet de filet d'écrou (57), dans lequel
- le filet extérieur (70) de la vis filetée (60) et le filet intérieur (53) de l'écrou d'entraînement (50) sont des filets trapézoïdaux correspondants,
dans lequel, à proximité de l'extrémité supérieure d'écrou (51), le flanc inférieur de filet d'écrou (56) présente une largeur décroissante (wl), ce qui engendre une petite zone de contact et une grande pression de surface entre le flanc inférieur de filet d'écrou (56) et une irrégularité formée par un désalignement angulaire entre des sections (61a, 61b) adjacentes de la vis filetée (60), de sorte qu'une usure de la partie inférieure du flanc inférieur de filet d'écrou (56) contre l'irrégularité soit facilitée, de telle manière que la forme du flanc inférieur de filet d'écrou (56) soit adaptée à l'irrégularité.

13. Agencement selon la revendication 12, dans lequel un angle (α) du flanc inférieur de filet d'écrou (56) et un angle (β) du flanc supérieur (75b) de la première section de filet (70b) sont différents l'un de l'autre.
